# EUROPÄISCHE PATENTANMELDUNG

(11) **EP 1 921 874 A1**
(43) Veröffentlichungstag der Anmeldung: **14.05.2008**
(21) Anmeldenummer: 06023162.8
(22) Anmeldetag: 07.11.2006
(51) Int. Cl.: H04Q 7/30

(54) **Verfahren und Vorrichtung zur Weiterleitung von MBMS-Inhalten**

(71) Anmelder: Nokia Siemens Networks GmbH & Co. KG, 81541 München (DE)
(72) Erfinder: Breuer, Volker Dr., 16727 Bötzow (DE); Martos-Riano, Demian, 10115 Berlin (DE)

(57) **Zusammenfassung**

Die Erfindung betrifft ein Verfahren zum Betreiben eines Funkkommunikationssystems, bei dem eine erste netzseitige Funkstation (A0) für eine Mehrzahl von Teilnehmerstationen (UE) bestimmte Informationen (MBMS) ausstrahlt. Eine zweite netzseitige Funkstation (B1) sendet für einzelne Teilnehmerstationen (UE) bestimmte Nachrichten, und die zweite netzseitige Funkstation (B1) empfängt per Funk die von der ersten netzseitigen Funkstation (A0) ausgestrahlten Informationen (MBMS) und strahlt diese aus. Weiterhin betrifft die Erfindung eine netzseitige Funkstation (B1) und ein Funkkommunikationssystem zur Durchführung des Verfahrens.

## Beschreibung

Die Erfindung betrifft ein Verfahren zum Betreiben eines Funkkommunikationssystems, bei dem eine netzseitige Funkstation Informationen, welche für eine Mehrzahl von Teilnehmerstationen bestimmt sind, ausstrahlt.

In Funkkommunikationssystemen werden Nachrichten, beispielsweise mit Sprachinformation, Bildinformation, Videoinformation, SMS (Short Message Service), MMS (Multimedia Messaging Service) oder anderen Daten, mit Hilfe von elektromagnetischen Wellen über eine Funkschnittstelle zwischen sendender und empfangender Station übertragen. Bei den Stationen kann es sich hierbei je nach konkreter Ausgestaltung des Funkkommunikationssystems um verschiedenartige Teilnehmerstationen oder netzseitige Funkstationen wie Repeater, Funkzugangspunkte oder Basisstationen handeln. In einem Mobilfunkkommunikationssystem handelt es sich bei zumindest einem Teil der Teilnehmerstationen um mobile Funkstationen. Das Abstrahlen der elektromagnetischen Wellen erfolgt mit Trägerfrequenzen, die in einem für das jeweilige System vorgesehenen Frequenzband liegen.

Derzeitige Mobilfunkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend z.B. aus Basisstationen, Einrichtungen zur Kontrolle und Steuerung der Basisstationen und weiteren netzseitigen Einrichtungen ausgebildet. Ein weiteres Beispiel stellen Breitbandnetze mit drahtlosem Zugang beispielsweise gemäß IEEE 802.16 dar. Zukünftige Mobilfunkkommunikationssysteme können z.B. Weiterentwicklungen von UMTS, als LTE (Long Term Evolution) bezeichnet, oder Systeme der vierten Generation, sowie Ad-hoc-Netze sein. Außer weiträumig organisierten (supralokalen) zellularen, hierarchischen Funknetzen existieren drahtlose lokale Netze (WLANs, Wireless Local Area Networks) mit einem in der Regel räumlich deutlich stärker begrenzten Funkabdeckungsbereich. Beispiele verschiedener Standards für WLANs sind HiperLAN, DECT, IEEE 802.11, Bluetooth und WATM.

Der Zugriff von Teilnehmerstationen auf das gemeinsame Übertragungsmedium wird bei Funkkommunikationssystemen durch Vielfachzugriffsverfahren/Multiplexverfahren (Multiple Access, MA) geregelt. Bei diesen Vielfachzugriffen kann das Übertragungsmedium im Zeitbereich (Time Division Multiple Access, TDMA), im Frequenzbereich (Frequency Division Multiple Access, FDMA), im Codebereich (Code Division Multiple Access, CDMA) oder im Raumbereich (Space Division Multiple Access, SDMA) zwischen den Teilnehmerstationen aufgeteilt werden. Auch Kombinationen von Vielfachzugriffsverfahren sind möglich, wie z.B. die Kombination eines Frequenzbereichs-Vielfachzugriffsverfahrens mit einem Codebereichs-Vielfachzugriffsverfahren.

In Abwärtsrichtung, d.h. von einer netzseitigen Funkstation zu Teilnehmerstationen, können Informationen über Punkt-zu-Punkt-Kanäle an einzelne Teilnehmerstationen oder über Punkt-zu-Mehrpunkt-Kanäle gleichzeitig an eine Mehrzahl von Teilnehmerstationen übertragen werden. Beispiele für Dienste, bei welchen mehrere Teilnehmerstationen gleichzeitig durch eine Nachricht adressiert werden, sind DVB-H (Digital Video Broadcasting - Handhelds), DMB (Digital Multimedia Broadcasting), und MBMS (Multimedia Broadcast Multicast Service).

Der Erfindung liegt die Aufgabe zugrunde, ein Verfahren zur Kommunikation per Funk, sowie eine netzseitige Funkstation und ein entsprechendes Funkkommunikationssystem aufzuzeigen, bei welchen von einer netnetzseitigen Funkstation an eine Gruppe von Teilnehmerstationen Informationen ausgestrahlt werden.

Diese Aufgabe wird durch ein Verfahren mit den Merkmalen des Anspruchs 1, sowie durch ein Funkkommunikationssystem und eine netzseitige Funkstation mit Merkmalen von nebengeordneten Ansprüchen gelöst. Vorteilhafte Ausgestaltungen und Weiterbildungen sind Gegenstand von Unteransprüchen.

Bei dem erfindungsgemäßen Verfahren zum Betreiben eines Funkkommunikationssystems strahlt eine erste netzseitige Funkstation für eine Mehrzahl von Teilnehmerstationen bestimmte Informationen aus. Eine zweite netzseitige Funkstation sendet für einzelne Teilnehmerstationen bestimmte Nachrichten. Die zweite netzseitige Funkstation empfängt per Funk die von der ersten netzseitigen Funkstation ausgestrahlten Informationen und strahlt diese aus.

Es wird die Kommunikation in Abwärtsrichtung betrachtet, d.h. Funkversendungen von netzseitigen Funkstationen zu Teilnehmerstationen. Hierbei kann unterschieden werden zwischen der Ausstrahlung der Informationen, welche für eine Mehrzahl von Teilnehmerstationen bestimmt sind, und Nachrichtenversendungen ein einzelne Teilnehmerstationen. Bei letzteren handelt es sich um so genannte Unicast oder Punkt-zu-Punkt Kommunikationen. Adressat einer Nachricht ist hierbei jeweils lediglich eine einzelne Teilnehmerstation. Vorzugsweise existiert zusätzlich zu jeder Unicast-Verbindung in Abwärtsrichtung auch eine Verbindung in Aufwärtsrichtung. Bei der Ausstrahlung der Informationen hingegen handelt es sich um eine Broadcast oder Multicast Ausstrahlung. Adressat der Informationen ist nicht eine einzelne Teilnehmerstation, sondern z.B. alle für einen bestimmten Dienst subskribierte Teilnehmerstationen. Trotz der Bestimmung der Informationen für eine Mehrzahl von Teilnehmerstationen ist es möglich, dass zeitweise lediglich eine einzelne Teilnehmerstation die von einer netzseitigen Funkstation ausgestrahlten Informationen empfängt.

Die Informationen werden von der ersten und auch von der zweiten netzseitigen Funkstation ausgestrahlt. Hierbei empfängt die zweite netzseitige Funkstation die von ihr ausgestrahlten Informationen zuvor per Funk von der ersten netzseitigen Funkstation. Somit werden die von der ersten netzseitigen Funkstation ausgestrahlten Informationen nicht nur von Teilnehmerstationen, sondern auch von der zweiten netzseitigen Funkstation empfangen. Durch die eigene Ausstrahlung der empfangenen Informationen führt die zweite netzseitige Funkstation eine Weiterleitung der Informationen durch; die zweite netzseitige Funkstation fungiert in Bezug auf die Informationen somit als Relaystation oder Repeater. Vorzugsweise trifft dies auf die Nachrichtenversendung an einzelne Teilnehmerstationen durch die zweite netzseitige Funkstation nicht zu, d.h. die zweite netzseitige Funkstation empfängt die von ihr an einzelne Teilnehmerstationen versendeten Nachrichten nicht per Funk von der ersten netzseitigen Funkstation. Diese Nachrichten werden vorteilhafterweise zu der zweiten netzseitige Funkstation über Leitung von einer anderen netzseitigen Einrichtung übertragen.

Vorzugsweise werden die Informationen von der zweiten netzseitigen Funkstation vor der Ausstrahlung nicht verändert. In diesem Fall sind die von der ersten und der zweiten netzseitigen Funkstation ausgestrahlten Informationen identisch. Alternativ hierzu ist es jedoch möglich, dass die zweite netzseitige Funkstation den Informationen vor der Ausstrahlung etwas hinzufügt oder Teile der Informationen nicht ausstrahlt.

In Weiterbildung der Erfindung empfängt eine Teilnehmerstation die Informationen von der ersten und der zweiten netzseitige Funkstation und kombiniert diese. Vorzugsweise erfolgt die Versendung der Informationen durch die erste und die zweite netzseitige Funkstation und somit auch der Empfang durch die Teilnehmerstation etwa gleichzeitig; aufgrund der Weiterleitung der Informationen durch die zweite netzseitige Funkstation findet die Ausstrahlung durch die zweite netzseitige Funkstation nach der Ausstrahlung durch die erste netzseitige Funkstation statt. Eine Kombination der zweifach empfangenen Informationen durch die Teilnehmerstation kann auf verschiedene Weisen erfolgen, wie z.B. durch Auswahl derjenigen Informationen, welche die Teilnehmerstation mit höherer Qualität empfangen hat, oder durch Berechnung von neuen Informationen aus den zweifach empfangenen Informationen.

Besonders vorteilhaft ist es, wenn die erste netzseitige Funkstation die Informationen vor der Ausstrahlung von einer netzseitigen Einrichtung über Leitung empfängt. In diesem Fall unterscheidet sich die Art und Weise, auf welche die erste netzseitige Funkstation die von ihr auszustrahlenden Informationen empfängt, von derjenigen, auf welche die zweite netzseitige Funkstation die von ihr auszustrahlenden Informationen empfängt.

In Ausgestaltung der Erfindung verwenden die erste und die zweite netzseitige Funkstation zur Ausstrahlung der Informationen die gleiche Funkfrequenz. Vorteilhaft ist es, wenn die Ausstrahlungen durch die erste und die zweite netzseitige Funkstation auch hinsichtlich anderer Funkressourcen wie Kode und annähernd auch Zeit nicht unterschiedlich sind. Dies ermöglicht eine konstruktive Überlagerung der Informationen am Ort eines Empfängers.

In Weiterbildung der Erfindung wird die Ausstrahlung der Informationen durch die zweite netzseitige Funkstation kontrolliert durch die erste netzseitige Funkstation, und/oder durch eine mit der ersten und der zweiten netzseitigen Funkstation verbundene Steuereinrichtung, und/oder durch die zweite netzseitige Funkstation. Das Kontrollieren kann hierbei eine oder mehrere der folgenden Größen umfassen: eine Bestimmung einer von der zweiten netzseitigen Funkstation für die Ausstrahlung der Informationen zu verwendenden Sendeleistung; eine Bestimmung von von der zweiten netzseitigen Funkstation für die Ausstrahlung der Informationen zu verwendenden Funkressourcen, wie z.B. Frequenz und/oder Zeit und/oder Raum und/oder Kode; eine Bestimmung einer von der zweiten netzseitigen Funkstation für die Ausstrahlung der Informationen zu verwendenden Senderichtung; eine Bestimmung betreffend die Art und/oder den Umfang der von der zweiten netzseitigen Funkstation auszustrahlenden Informationen. Letzteres ist insbesondere dann sinnvoll, wenn die zweite netzseitige Funkstation die empfangenen Informationen nicht grundsätzlich, sondern nur unter bestimmten Bedingungen wie z.B. die Gegenwart einer Teilnehmerstation ausstrahlen soll, oder wenn die netzseitige Funkstation lediglich einen Teil der empfangenen Informationen ausstrahlen soll. Erfolgt das Kontrollieren nicht oder nicht nur durch die zweite netzseitige Funkstation, so kann eine Anweisungsnachricht an die zweite netzseitige Funkstation gesendet werden, welche die jeweilige Bestimmung angibt. Stammt die Anweisungsnachricht, von der ersten netzseitigen Funkstation, so kann sie per Funk gesendet werden; stammt sie von einer netzseitigen Steuereinrichtung, so wird sie vorzugsweise per Leitung übertragen.

Das Kontrollieren der erfolgt vorzugsweise unter Verwendung von zumindest einer von der zweiten netzseitigen Funkstation empfangenen von einer Teilnehmerstation stammenden Mitteilung. Diese Mitteilung kann z.B. den Aufenthaltsort der Teilnehmerstation oder den Wunsch zum Empfang der Informationen betreffen. Erfolgt das Kontrollieren nicht oder nicht nur durch die zweite netzseitige Funkstation, so kann die zweite netzseitige Funkstation die von ihr empfangene Mitteilung bzw. Mitteilungen an die betreffende Kontrollinstanz weiterleiten.

In Ausgestaltung der Erfindung führt die zweite netzseitige Funkstation unter Verwendung der von der ersten netzseitigen Funkstation ausgestrahlten Informationen eine Synchronisation zwischen der ersten und der zweiten netzseitigen Funkstation durch. In diesem Fall kann die zweite netzseitige Funkstation den Informationen Synchronisationsinformationen entnehmen. Diese Synchronisation kann die Frequenz und/oder die Zeit betreffen.

Einer Weiterbildung der Erfindung gemäß sendet die zweite netzseitige Funkstation Benachrichtigungsinformationen an Teilnehmerstationen betreffend die Möglichkeit der Ausstrahlung der Informationen durch die zweite netzseitige Funkstation. Besonders vorteilhaft ist es, wenn die zweite netzseitige Funkstation den Inhalt der Benachrichtigungsinformationen den von der ersten netzseitigen Funkstation ausgestrahlten Informationen entnimmt. In diesem Fall werden die Benachrichtigungsinformationen durch die zweite netzseitige Funkstation aufgrund ihres Empfangs der von der ersten netzseitigen Funkstation ausgestrahlten Informationen gesendet.

Es ist vorteilhaft, wenn auch die erste netzseitige Funkstation für einzelne Teilnehmerstationen bestimmte Nachrichten sendet. Es können somit die erste und die zweite netzseitige Funkstation hinsichtlich ihrer Funktionalität zur Kommunikation mit einzelnen Teilnehmerstationen gleich sein.

Die zweite netzseitige Funkstation kann die Informationen in Richtung zur ersten netzseitigen Funkstation hin ausstrahlen. Hierdurch kann eine Verstärkung der Informationen zwischen der ersten und der zweiten netzseitigen Funkstation bewirkt werden. Eine Ausstrahlung in Richtung zur ersten netzseitigen Funkstation hin kann z.B. durch eine omnidirektionale Ausstrahlung stattfinden; auch eine gerichtete auf die erste netzseitige Funkstation ausgerichtete Ausstrahlung ist möglich. Alternativ kann die zweite netzseitige Funkstation die Informationen gerichtet in Richtung von der ersten netzseitigen Funkstation weg ausstrahlen.

In Weiterbildung der Erfindung sendet eine dritte netzseitige Funkstation für einzelne Teilnehmerstationen bestimmte Nachrichten, empfängt die von der zweiten netzseitigen Funksta-tion ausgestrahlten Informationen per Funk, und strahlt die Informationen aus. Hierdurch entsteht eine Weiterleitungskette für die Informationen: der erste Sprung entspricht der Übertragung zwischen der ersten und der zweiten netzseitigen Funkstation, der zweite Sprung entspricht der Übertragung zwischen der zweiten und der dritten netzseitigen Funkstation. Eine größere Anzahl von Sprüngen kann zum Einsatz kommen.

Mit Vorzug handelt es sich bei den Informationen um MBMS-Informationen. Der Dienst MBMS wird beschrieben z.B. in 3GPP TS 22.146 ("Multimedia Broadcast / Multicast Service"), und in 3GPP TS 22.246 ("MBMS User Services").

Die erfindungsgemäße netzseitige Funkstation für ein Funkkommunikationssystem weist Mittel auf zum Senden von für einzelne Teilnehmerstationen bestimmten Nachrichten, sowie Mittel zum Empfangen von von einer anderen netzseitigen Funkstation ausgestrahlten Informationen per Funk, wobei die Informationen für eine Mehrzahl von Teilnehmerstationen bestimmt sind, und zum Ausstrahlen der empfangenen Informationen.

Das erfindungsgemäße Funkkommunikationssystem umfasst zumindest eine erste und eine zweite netzseitige Funkstation. Es sind Mittel der ersten netzseitigen Funkstation vorhanden zum Ausstrahlen von für eine Mehrzahl von Teilnehmerstationen bestimmten Informationen, sowie Mittel der zweiten netzseitigen Funkstation zum Senden von für einzelne Teilnehmerstationen bestimmten Nachrichten, und Mittel der zweiten netzseitigen Funkstation zum Empfangen der von der ersten netzseitigen Funkstation ausgestrahlten Informationen per Funk, und zum Ausstrahlen der empfangenen Informationen.

Die erfindungsgemäße netzseitige Funkstation und das erfindungsgemäße Funkkommunikationssystem eignen sich insbesondere zur Durchführung des erfindungsgemäßen Verfahrens, wobei dies auch auf die Ausgestaltungen und Weiterbildungen zutreffen kann. Hierzu können sie weitere geeignete Mittel umfassen.

Im folgenden wird die Erfindung anhand eines Ausführungsbeispiels näher erläutert. Dabei zeigt:

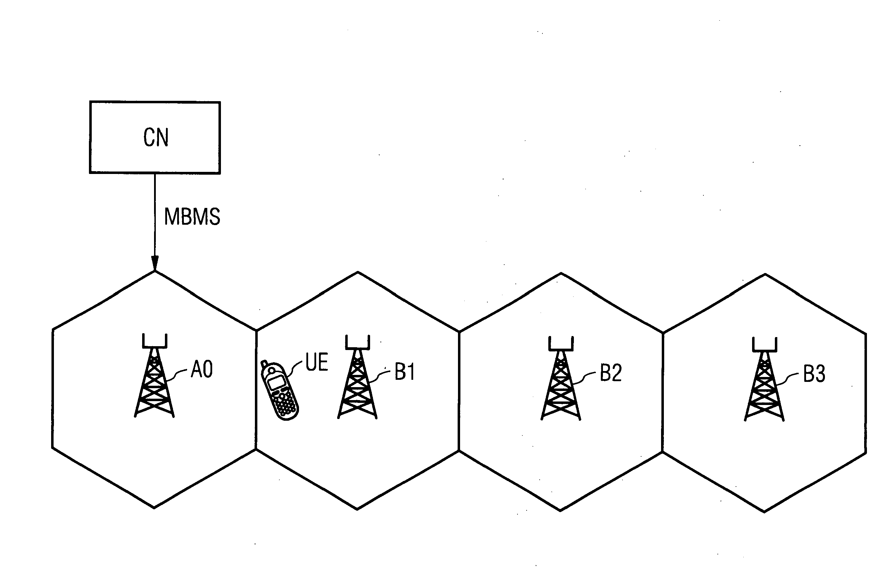

- Figur 1:: einen Ausschnitt aus einem zellularen Funkkommunikationssystem.

Die Erfindung ist auf verschiedene Arten von Funkkommunikationssystemen anwendbar. Im folgenden wird als konkretes Beispiel ein Mobilfunkkommunikationssystem nach dem Standard UMTS betrachtet. Die Erfindung ist jedoch nicht auf derartige Systeme beschränkt, insbesondere kann es sich bei dem betrachteten Mobilfunkkommunikationssystem auch um ein System gemäß einer Weiterentwicklung von UMTS, als LTE (Long Term Evolution) bezeichnet, handeln. Der in Figur 1 dargestellte Ausschnitt aus einem zellularen Funkkommunikationssystem zeigt die Funkzellen der netzseitigen Funkstationen A0, B1, B2 und B3. Es können weitere Funkzellen vorhanden sein, welche aus Gründen der Übersichtlichkeit nicht in Figur 1 dargestellt sind.

Die netzseitigen Funkstationen A0, B1, B2 und B3 kommunizieren jeweils mit Teilnehmerstationen. Beispielhaft ist die Teilnehmerstation UE in der Funkzelle der netzseitigen Funkstation B1 dargestellt. Im folgenden wird lediglich die Kommunikation in Abwärtsrichtung betrachtet, d.h. Nachrichtenversendungen von den netzseitigen Funkstationen A0, B1, B2 und B3 zu Teilnehmerstationen. Den Teilnehmerstationen werden hierbei unterschiedliche Dienste zur Verfügung gestellt. Hierbei handelt es sich u.a. um Dienste mit Unicast- bzw. Punkt-zu-Punkt-Verbindungen. Bei diesen Diensten versenden die netzseitigen Funkstationen A0, B1, B2 und B3 Nachrichten, welche jeweils für einzelne Teilnehmerstationen bestimmt sind. Beispielsweise werden Telefongespräche über Unicast-Verbindungen übertragen. Die Funkressourcen werden hierbei einzelnen Teilnehmerstationen dediziert zugewiesen.

Zusätzlich zu den Unicast-Diensten können Teilnehmerstationen den Dienst MBMS (Multimedia Broadcast Multicast Service) nutzen. Hierbei handelt es sich um einen Broadcast- oder Multicast-Dienst, d.h. die MBMS-Inhalte werden nicht einzelnen Teilnehmerstationen, sondern einer Gruppe von Teilnehmerstationen zur Verfügung gestellt. Die Ausstrahlung eines MBMS-Inhaltes erfolgt in jeder Funkzelle lediglich einmal, bestimmt für alle in der Funkzelle befindlichen Teilnehmerstationen der MBMS-Gruppe. Die MBMS-Inhalte umfassen insbesondere Multimediadaten wie z.B. TV-Daten oder MMS-Daten (MMS: Multimedia Messaging Service).

Für die Ausstrahlung der MBMS-Inhalte wird in den Funkzellen der netzseitigen Funkstationen A0, B1, B2 und B3 das gleiche Frequenzband verwendet. Eine Trennung der in einer Funkzelle ausgestrahlten MBMS-Inhalte von den in einer anderen Funkzelle ausgestrahlten MBMS-Inhalten durch Separationsverfahren wie z.B. CDMA oder TDMA erfolgt nicht, da es sich um die gleichen Informationen handelt. Ferner werden die MBMS-Inhalte in den verschiedenen Funkzellen etwa gleichzeitig ausgestrahlt, so dass keine unerwünschten Interferenzen zwischen den Ausstrahlungen in den verschiedenen Funkzellen auftreten.

In Figur 1 ist der Fall dargestellt, dass die netzseitige Funkstation A0 die MBMS-Inhalte MBMS vom Kernnetz CN erhält. Die Übertragung zwischen dem Kernnetz CN und der netzseitigen Funkstation A0 kann hierbei auf an sich bekannte Weise erfolgen. Hingegen werden den netzseitigen Funkstationen B1, B2 und B3 die MBMS-Inhalte MBMS nicht vom Kernnetz CN zur Verfügung gestellt. Diese Unterscheidung zwischen der netzseitigen Funkstation A0 einerseits und den netzseitigen Funkstationen B1, B2, B3 andererseits hinsichtlich der Anbindung an das Kernnetz CN gilt nur für die MBMS-Inhalte MBMS. Die per Unicast auszustrahlenden Nachrichten empfangen auch die netzseitigen Funkstationen B1, B2, B3 direkt vom Kernnetz CN.

Die netzseitige Funkstation A0 strahlt die vom Kernnetz CN empfangenen MBMS-Inhalte MBMS aus. Die netzseitige Funkstation B1 empfängt die von der netzseitigen Funkstation A0 ausgestrahlten MBMS-Inhalte MBMS und leitet diese weiter. Unter Weiterleitung wird hierbei die Ausstrahlung der MBMS-Inhalte MBMS auf für den Dienst MBMS übliche Weise, insbesondere unter Verwendung der für MBMS zur Verfügung stehenden Funkressourcen, verstanden. Die Weiterleitung der MBMS-Inhalte MBMS durch die netzseitige Funkstation B1 erfolgt rasch, so dass die Ausstrahlungen der MBMS-Inhalte MBMS durch die netzseitigen Funkstationen A0 und B1 etwa gleichzeitig erfolgen. Die Verzögerung, welche durch die Weiterleitung eintritt, ist in der Größenordnung einer Mehrwegeverzögerung (englisch: multipath delay). Die verschiedenen Ausstrahlungen der MBMS-Inhalte MBMS sind somit synchronisiert. Wenn daher die Teilnehmerstation UE die MBMS-Inhalte MBMS sowohl von der netzseitigen Funkstation A0 als auch von der netzseitigen Funkstation B1 empfängt, kann sie diese beiden überlagerten Signale gemeinsam verarbeiten. Eine derartige gemeinsame Verarbeitung bzw. Kombination von empfangenen MBMS-Inhalten MBMS erhöht die Qualität der MBMS-Inhalte MBMS für die Teilnehmerstation UE.

Die netzseitige Funkstation B2 empfängt die von der netzseitigen Funkstation B1 ausgestrahlten MBMS-Inhalte MBMS und leitet diese weiter; weiterhin empfängt die netzseitige Funkstation B3 die von der netzseitigen Funkstation B2 ausgestrahlten MBMS-Inhalte MBMS und leitet diese weiter. Für die Weiterleitungen durch die netzseitigen Funkstationen B2 und B3 gilt das in Bezug auf die netzseitige Funkstation B1 erläuterte entsprechend.

Für die Weiterleitung der MBMS-Inhalte MBMS können verschiedene Verfahren zum Einsatz kommen. Eine vorteilhafte technische Umsetzung ist, dass die Sendeleistung, mit welcher die weiterleitende netzseitige Funkstation die MBMS-Inhalte MBMS ausstrahlt, höher ist als die Empfangsstärke der MBMS-Inhalte MBMS am Ort der weiterleitenden netzseitigen Funkstation (englisch: Amplify and Forward).

Das für die MBMS-Inhalte MBMS verwendete Frequenzband ist vorzugsweise durch einen Schutzbereich (englisch: guard band) von dem für die Versendung der Unicast-Informationen verwendeten Frequenzbereich getrennt. Dieser Schutzbereich kann z.B. einige 10 MHz breit sein. Dies ermöglicht es den weiterleitenden netzseitigen Funkstationen B1, B2 und B3, die MBMS-Inhalte MBMS ohne störende Interferenz durch andere Signale, insbesondere auch durch eigene Unicast-Kommunikationen, zu empfangen.

Es existieren somit netzseitige Funkstationen, welchen die MBMS-Inhalte MBMS direkt vom Kernnetz CN zur Verfügung gestellt werden, sowie andere netzseitige Funkstationen, welche die MBMS-Inhalte MBMS von einer anderen netzseitigen Funkstation empfangen und weiterleiten. Dies weist den Vorteil auf, dass weniger Verbindungskapazität zwischen dem Kernnetz CN und netzseitigen Funkstationen benötigt wird, wodurch die OEPX (Operational Expenditures) des Funkkommunikationssystems reduziert werden.

Für dieses allgemeine Prinzip existieren eine Vielzahl konkreter Ausgestaltungen, von welchen im folgenden manche beispielhaft genannt werden:
- Alle netzseitigen Funkstationen A0, B1, B2, B3, welche die MBMS-Inhalte MBMS ausstrahlen, stellen zusätzlich Unicast-Verbindungen zu Teilnehmerstationen zur Verfügung.
- Es handelt sich bei den netzseitigen Funkstationen B1, B2, B3, welche die MBMS-Inhalte MBMS durch Weiterleitung ausstrahlen, um netzseitige Funkstationen, welche zusätzlich Unicast-Verbindungen zu Teilnehmerstationen zur Verfügung stellen. Die netzseitige Funkstation A0, welche die MBMS-Inhalte MBMS direkt vom Kernnetz CN empfängt, steht nicht für Unicast-Verbindungen zu Teilnehmerstationen zur Verfügung.
- Die Reichweite der Ausstrahlung der MBMS-Inhalte MBMS durch die netzseitige Funkstation A0 ist größer als die Reichweite der Weiterleitungen. Dementsprechend besteht ein größerer Abstand zwischen der netzseitige Funkstation A0 und der ersten weiterleitenden netzseitigen Funkstation B1 als zwischen den einzelnen weiterleitenden netzseitigen Funkstationen B1 und B2, B2 und B3.
- Die Weiterleitung der MBMS-Inhalte MBMS erfolgt nicht durch alle netzseitigen Funkstationen des Funkkommunikationssystems, sondern lediglich durch eine Teilmenge der netzseitigen Funkstationen. Somit existieren netzseitige Funkstationen, welche die MBMS-Inhalte MBMS nicht ausstrahlen.
- Die Weiterleitung der MBMS-Inhalte MBMS erfolgt über verschiedene Anzahlen von Sprüngen. Während in Figur 1 eine Weiterleitung über 3 Sprünge dargestellt ist, können zusätzlich im Funkkommunikationssystem andere Konstellationen existieren, gemäß welchen die Weiterleitung über weniger oder mehr als 3 Sprünge stattfindet. Hierbei sollte beachtet werden, dass die am Ende der Kette vorhandene Qualität der MBMS-Inhalte MBMS in der Regel mit der Anzahl der Sprünge bzw. der Länge der Kette abnimmt.

Bezüglich der Senderichtung bei der Weiterleitung existieren verschiedene Möglichkeiten. Bei einer so genannten "inward repetition" strahlt die weiterleitende netzseitige Funkstation auch in Richtung derjenigen netzseitigen Funkstation aus, von welcher sie die MBMS-Inhalte MBMS empfängt. In diesem Fall würde die Teilnehmerstation UE beispielsweise die MBMS-Inhalte MBMS sowohl von der netzseitigen Funkstation A0 als auch von der netzseitigen Funkstation B1 empfangen. Entsprechend würde eine zwischen den netzseitigen Funkstationen B1 und B2 befindliche Teilnehmerstation die MBMS-Inhalte MBMS sowohl von der netzseitigen Funkstation B1 als auch von der netzseitigen Funkstation B2 empfangen. Bei einer so genannten "forward repetition" hingegen strahlt die weiterleitende netzseitige Funkstation hauptsächlich in Richtung der nächsten weiterleitenden netzseitigen Funkstation aus. In diesem Fall würde die Teilnehmerstation UE beispielsweise die MBMS-Inhalte MBMS nur von der netzseitigen Funkstation A0 empfangen. Entsprechend würde eine zwischen den netzseitigen Funkstationen B1 und B2 befindliche Teilnehmerstation die MBMS-Inhalte MBMS nur von der netzseitigen Funkstation B1 empfangen.

Bezüglich der Größe des Funkabdeckungsbereiches einer netzseitigen Funkstation existiert ein Unterschied zwischen der Ausstrahlung der MBMS-Inhalte MBMS einerseits und anderen ausgestrahlten Informationen andererseits. Bei den anderen ausgestrahlten Informationen wird versucht, Interzell-Interferenz zu vermeiden. Daher beschränkt sich der Funkabdeckungsbereich für diese Informationen in etwa auf die in Figur 1 dargestellten Funkzellen. Eine derartige Beschränkung ist für die MBMS-Inhalte MBMS jedoch nicht nötig. Denn wie bereits erläutert führt eine Überschneidung von von verschiedenen netzseitigen Funkstationen ausgestrahlten MBMS-Inhalten MBMS zu einer Qualitätssteigerung. Überdies müssen die von einer netzseitigen Funkstation ausgestrahlten MBMS-Inhalte MBMS die nächste weiterleitende netzseitige Funkstation erreichen. Daher erstreckt sich der Funkabdeckungsbereich einer netzseitigen Funkstation hinsichtlich der MBMS-Inhalte MBMS zumindest bis zur nächsten weiterleitenden netzseitigen Funkstation.

Die Vorgehensweise, wonach für die Weiterleitung der MBMS-Inhalte MBMS nicht speziell zu diesem Zweck installierte Repeater, sondern vielmehr "normale" netzseitige Funkstationen eingesetzt werden, weist eine Reihe von Vorteilen auf, welche im folgenden näher erläutert werden. Diese basieren darauf, dass ein Austausch von Kontrollinformationen erfolgen kann einerseits zwischen der weiterleitenden netzseitigen Funkstation und der netzseitigen Funkstation, von welcher sie die MBMS-Inhalte MBMS empfängt, und andererseits zwischen der Weiterleitungsfunktionalität und der "normalen" Funktionalität einer weiterleitenden netzseitigen Funkstation. Unter der normalen Funktionalität einer weiterleitenden netzseitigen Funkstation wird hierbei die nicht auf den Dienst MBMS bezogene Funktionalität verstanden.

Gemäß der normalen Funktionalität einer weiterleitenden netzseitigen Funkstation verfügt diese bereits über für ihren Betrieb notwendige Voraussetzungen wie z.B. Stromversorgung, Anbindung an bestimmte Netzwerknoten, wie z.B. an die netzseitige Funkstation, von welcher sie die MBMS-Inhalte MBMS empfängt, oder an O&M (Operation & Maintenance) Einrichtungen des Kernnetzes CN, und senderseitige Signalverabeitungshardware und -software.

Aus den über Funk empfangenen MBMS-Inhalten MBMS kann die weiterleitende netzseitige Funkstation Synchronisationsinformationen entnehmen, wie z.B. den Beginn der Zeitrahmen einer anderen netzseitigen Funkstation. Hierdurch wird eine Synchronisation zwischen einer ersten netzseitigen Funkstation und einer zweiten netzseitigen Funkstation, welche die von der ersten netzseitigen Funkstation ausgestrahlten MBMS-Inhalte MBMS weiterleitet, ermöglicht. Es kann somit auf andere Synchronisationsmechanismen, wie z.B. den Einsatz von GPS zu Synchronisationszwecken, verzichtet werden.

Den über Funk empfangenen MBMS-Inhalten MBMS kann die weiterleitende netzseitige Funkstation weiterhin entnehmen, welche MBMS Dienste aktuell angeboten werden. Diese Information kann die weiterleitende netzseitige Funkstation im Anschluss den Teilnehmerstationen innerhalb ihrer Zelle per Broadcast mitteilen. Für diesen Broadcast wird nicht das für die MBMS-Ausstrahlung und -Weiterleitung eingesetzte Frequenzband verwendet, sondern ein für Unicast-Verbindungen und Ausstrahlung von allgemeinen Zellinformationen verwendeter Frequenzbereich. Hierdurch wird den Teilnehmerstationen erspart, das für die MBMS-Ausstrahlung und -Weiterleitung eingesetzte Frequenzband abzuhören, um herauszufinden, welche MBMS-Dienste aktuell verfügbar sind.

Die Kontrolle der weiterleitenden netzseitigen Funkstation hinsichtlich ihrer Weiterleitungsfunktionalität umfasst Anweisungen hinsichtlich des Ein- und Ausschaltens der Weiterleitungsfunktionalität, hinsichtlich der Ausstrahlungsrichtung, hinsichtlich der Sendestärke der Weiterleitungen, hinsichtlich der Art der weiterzuleitenden MBMS-Inhalte MBMS, hinsichtlich der Art der zur Weiterleitung zu verwendenden Funkressourcen bei Einsatz von Separationsverfahren wie FDM (Frequency Division Mulitplexing), TDM (Time Division Mulitplexing), CDM (Code Division Mulitplexing), usw.. Anweisungen hinsichtlich der Art der weiterzuleitenden MBMS-Inhalte MBMS, sowie der Einsatz von Separationsverfahren für die MBMS-Ausstrahlung und -Weiterleitung eignet sich insbesondere für den Fall, dass verschiedene MBMS-Dienste angeboten werden, welche im gleichen Frequenzbereich ausgestrahlt werden. Hierbei können mehrere MBMS-Dienste mit gleichem Abdeckungsbereich vorhanden sein, wie z.B. verschiedene TV-Programme, oder auch MBMS-Dienste mit unterschiedlichen Abdeckungsbereichen, wie z.B. ein nationales und ein regionales TV-Programm.

Die genannten Kontrollaufgaben betreffend die Weiterleitung können zentral oder dezentral durchgeführt werden. Für eine zentrale Kontrolle kann eine Kontrolleinrichtung wie z.B. ein RNC (Radio Network Controller) oder ein eigens für MBMS zuständiger Controller, zuständig sein, welche im Beispiel von Figur 1 sowohl für die Steuerung der netzseitigen Funkstation A0, als auch der weiterleitenden netzseitigen Funkstationen B1, B2, B3 zuständig sein kann. Für eine dezentrale Kontrolle hingegen kann im Beispiel von Figur 1 die netzseitige Funkstation A0 zuständig sein, welche die MBMS-Inhalte MBMS vom Kernnetz CN empfängt.

Zusätzlich zu der erläuterten zentralen oder dezentralen Steuerung einer weiterleitenden netzseitigen Funkstation ist auch eine Eigensteuerung durch die weiterleitende netzseitige Funkstation möglich. Diese Eigensteuerung kann sich auf alle oder auch nur einen Teil der oben erläuterten Kontrollaufgaben erstrecken. Für den Einsatz der Eigensteuerung ist es vorteilhaft, wenn die weiterleitende netzseitige Funkstation Informationen berücksichtigt, welche sie von Teilnehmerstationen innerhalb ihrer Funkzelle empfängt. Diese Informationen können der weiterleitenden netzseitigen Funkstation beispielsweise anzeigen, dass eine Teilnehmerstation die Ausstrahlung von MBMS-Inhalten wünscht und/oder den Ort einer an MBMS-Inhalten interessierten Teilnehmerstation und/oder die Art der von der Teilnehmerstation gewünschten MBMS-Inhalte. Derartige Informationen können auch bei der erläuterten zentralen oder dezentralen Steuerung zum Einsatz kommen. In diesem Fall übermittelt die weiterleitende netzseitige Funkstation die relevanten von Teilnehmerstationen empfangenen Informationen an die zuständige Kontrolleinrichtung.

Die Berücksichtigung von von Teilnehmerstationen gesendeten Informationen bei der Steuerung von weiterleitenden netzseitigen Funkstationen hat den Vorteil, dass Funkressourcen effizient eingesetzt werden können. So kann auf die Ausstrahlung von MBMS-Inhalten verzichtet werden, wenn sich aktuell in dem betreffenden Gebiet keine an den MBMS-Inhalten interessierte Teilnehmerstation befindet. Gegebenenfalls können Funkressourcen, welche zeitweise nicht zur Ausstrahlung von MBMS-Inhalten benötigt werden, zu anderen Zwecken eingesetzt werden, wie z.B. für den Betrieb eines WiMAX Systems.

## Patentansprüche

1. Verfahren zum Betreiben eines Funkkommunikationssystems, bei dem
eine erste netzseitige Funkstation (A0) für eine Mehrzahl von Teilnehmerstationen (UE) bestimmte Informationen (MBMS) ausstrahlt,
eine zweite netzseitige Funkstation (B1) für einzelne Teilnehmerstationen (UE) bestimmte Nachrichten sendet, und
die zweite netzseitige Funkstation (B1) die von der ersten netzseitigen Funkstation (A0) ausgestrahlten Informationen (MBMS) per Funk empfängt und ausstrahlt.

2. Verfahren nach Anspruch 1, bei dem
eine Teilnehmerstation (UE) die von der ersten netzseitigen Funkstation (A0) und die von der zweiten netzseitigen Funkstation (B1) ausgestrahlten Informationen (MBMS) empfängt und kombiniert.

3. Verfahren nach Anspruch 1 oder 2, bei dem
die erste netzseitige Funkstation (A0) vor der Ausstrahlung der Informationen (MBMS) die Informationen (MBMS) über Leitung von einer netzseitigen Einrichtung (CN) empfängt.

4. Verfahren nach einem der Ansprüche 1 bis 3, bei dem
die erste netzseitige Funkstation (A0) und die zweite netzseitige Funkstation (B1) zur Ausstrahlung der Informationen (MBMS) die gleiche Funkfrequenz verwenden.

5. Verfahren nach einem der Ansprüche 1 bis 4, bei dem
die Ausstrahlung der Informationen (MBMS) durch die zweite netzseitige Funkstation (B1) kontrolliert wird durch
• die erste netzseitige Funkstation (A0), und/oder
• eine mit der ersten netzseitigen Funkstation (A0) und der zweiten netzseitigen Funkstation (B1) verbundene Steuereinrichtung (CN), und/oder
• die zweite netzseitige Funkstation (B1).

6. Verfahren nach Anspruch 5, bei dem das Kontrollieren umfasst:
• eine Bestimmung einer von der zweiten netzseitigen Funkstation (B1) für die Ausstrahlung der Informationen (MBMS) zu verwendenden Sendeleistung, und/oder
• eine Bestimmung von von der zweiten netzseitigen Funkstation (B1) für die Ausstrahlung der Informationen (MBMS) zu verwendenden Funkressourcen, und/oder
• eine Bestimmung einer von der zweiten netzseitigen Funkstation (B1) für die Ausstrahlung der Informationen (MBMS) zu verwendenden Senderichtung, und/oder
• eine Bestimmung betreffend die Art und/oder den Umfang der von der zweiten netzseitigen Funkstation (B1) auszustrahlenden Informationen (MBMS).

7. Verfahren nach Anspruch 5 oder 6, bei dem
das Kontrollieren unter Verwendung von zumindest einer von der zweiten netzseitigen Funkstation (B1) empfangenen von einer Teilnehmerstation (UE) stammenden Mitteilung erfolgt.

8. Verfahren nach einem der Ansprüche 1 bis 7, bei dem
die zweite netzseitige Funkstation (B1) unter Verwendung der von der ersten netzseitigen Funkstation (A0) ausgestrahlten Informationen (MBMS) eine Synchronisation zwischen der ersten netzseitigen Funkstation (A0) und der zweiten netzseitigen Funkstation (B1) durchführt.

9. Verfahren nach einem der Ansprüche 1 bis 8, bei dem
die zweite netzseitige Funkstation (B1) Benachrichtigungsinformationen (MBMS) an Teilnehmerstationen (UE) sendet betreffend die Möglichkeit der Ausstrahlung der Informationen (MBMS) durch die zweite netzseitige Funkstation (B1).

10. Verfahren nach einem der Ansprüche 1 bis 9, bei dem
die erste netzseitige Funkstation (A0) für einzelne Teilnehmerstationen (UE) bestimmte Nachrichten sendet.

11. Verfahren nach einem der Ansprüche 1 bis 10, bei dem
die zweite netzseitige Funkstation (B1) die Informationen (MBMS) in Richtung zur ersten netzseitigen Funkstation (A0) hin ausstrahlt.

12. Verfahren nach einem der Ansprüche 1 bis 10, bei dem
die zweite netzseitige Funkstation (B1) die Informationen (MBMS) gerichtet in Richtung von der ersten netzseitigen Funkstation (A0) weg ausstrahlt.

13. Verfahren nach einem der Ansprüche 1 bis 12, bei dem eine dritte netzseitige Funkstation (B2) für einzelne Teilnehmerstationen (UE) bestimmte Nachrichten sendet, und
die dritte netzseitige Funkstation (B2) die von der zweiten netzseitigen Funkstation (B1) ausgestrahlten Informationen (MBMS) per Funk empfängt und ausstrahlt.

14. Verfahren nach einem der Ansprüche 1 bis 13, bei dem
es sich bei den Informationen (MBMS) um MBMS-Informationen handelt.

15. Netzseitige Funkstation (B1) für ein Funkkommunikationssystem, mit
Mitteln zum Senden von für einzelne Teilnehmerstationen (UE) bestimmten Nachrichten,
Mitteln zum Empfangen von von einer anderen netzseitigen Funkstation (A0) ausgestrahlten Informationen (MBMS) per Funk, wobei die Informationen (MBMS) für eine Mehrzahl von Teilnehmerstationen (UE) bestimmt sind, und zum Ausstrahlen der empfangenen Informationen (MBMS)

16. Funkkommunikationssystem, umfassend eine erste netzseitige Funkstation (A0) und eine zweite netzseitige Funkstation (B1), mit
Mitteln der ersten netzseitigen Funkstation (A0) zum Ausstrahlen von für eine Mehrzahl von Teilnehmerstationen (UE) bestimmten Informationen (MBMS),
Mitteln der zweiten netzseitigen Funkstation (B1) zum Senden von für einzelne Teilnehmerstationen (UE) bestimmten Nachrichten,
Mitteln der zweiten netzseitigen Funkstation (B1) zum Empfangen der von der ersten netzseitigen Funkstation (A0) ausgestrahlten Informationen (MBMS) per Funk und zum Ausstrahlen der empfangenen Informationen (MBMS).
